(19) Europäisches Patentamt
European Patent Office
Office européen des brevets

(11) **EP 2 345 948 A1**

(12) **DEMANDE DE BREVET EUROPEEN**

(43) Date de publication:
**20.07.2011 Bulletin 2011/29**

(51) Int Cl.:
***G06F 1/08*** (2006.01)

(21) Numéro de dépôt: **11150061.7**

(22) Date de dépôt: **04.01.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **08.01.2010 FR 1050094**

(71) Demandeurs:
- **STmicroelectronics SA**
  **92120 Montrouge (FR)**
- **STMicroelectronics (Crolles 2) SAS**
  **38920 Crolles (FR)**

(72) Inventeurs:
- **Wilson, Robin**
  **38410 Saint Martin d'Uriage (FR)**
- **Engels, Sylvain**
  **38240 Meylan (FR)**
- **Balossier, Eric**
  **38100 Grenoble (FR)**

(74) Mandataire: **Zapalowicz, Francis**
**Casalonga & Partners**
**Bayerstrasse 71/73**
**80335 München (DE)**

(54) **Procédé et dispositif de contrôle de la fréquence d'un signal d'horloge d'un circuit intégré**

(57) Dispositif électronique comprenant un générateur commandé (2) apte à générer un signal d'horloge de fréquence ajustable à au moins une partie d'un circuit intégré (CI) couplée à la sortie du générateur et comportant au moins un transistor ayant une grille de longueur inférieure à quarante-cinq nanomètres, des moyens de détermination (3) pour déterminer la température de ladite au moins une partie du circuit intégré, et des moyens de contrôle (4) couplés aux moyens de détermination (3) et configurés pour commander ledit générateur (2) de façon à augmenter la fréquence du signal d'horloge lors- que ladite température augmente.

Printed by Jouve, 75001 PARIS (FR)

EP 2 345 948 A1

**Description**

L'invention concerne les circuits intégrés et plus particulièrement le contrôle de la fréquence d'un signal d'horloge d'un circuit intégré comportant des transistors réalisés avec une technologie CMOS inférieure à 45 nanomètres, et en particulier avec une technologie CMOS de 32 nanomètres.

On rappelle ici que la valeur de la technologie définit la longueur de grille des transistors CMOS, c'est-à-dire des transistors MOS complémentaires.

Les transistors réalisés en technologie CMOS inférieure à 45 nanomètres et plus particulièrement, à 32 nanomètres, font l'objet de nombreuses publications, notamment « 32 nm General Purpose Bulk CMOS Technology for High Performance Applications at low Voltage (Electron Devices Meeting, 2008, IEDM 2008, IEEE International, p.1 à 4, ISSN : 8164-2284, ISBN : 978-1-4244-2377-4, publiée le 15-17 décembre 2008) », « 32 nm Gate-First High-k/Metal-Gate Technology for High Performance Low Power Applications (Electron Devices Meeting, 2008, IEDM 2008, IEEE International, p. 1 à 4, ISSN : 8164-2284, ISBN : 978-1-4244-2377-4, publiée le 15-17 décembre 2008) » et « A 32 nm Logic Technology Featuring 2$^{nd}$-Generation High-k + Metal-Gate Transistors, Enhanced Channel Strain and 0.171 $\mu m^2$ SRAM Cell Size in a 291Mb Array (Electron Devices Meeting, 2008, IEDM 2008, IEEE International, p.1 à 4, ISSN : 8164-2284, ISBN: 978-1-4244-2377-4, publiée le 15-17 décembre 2008) ».

Par ailleurs, des études de caractéristiques et de performances de ces transistors ont également été publiées, comme par exemple, dans les publications « Physical and Electrical Analysis of the Stress Memorization Technique (SMT) using Poly-Gates and its Optimization for Beyond 45-nm High-Performance Applications (Electron Devices Meeting, 2008, IEDM 2008, IEEE International, p.1 à 4, ISSN : 8164-2284, ISBN : 978-1-4244-2377-4, publiée le 15-17 décembre 2008) » et « Gate Length Scaling and High Drive Currents Enabled for High Performance SOI Technology using High-k/Metal Gate (Electron Devices Meeting, 2008, IEDM 2008, IEEE International, p.1 à 4, ISSN : 8164-2284, ISBN : 978-1-4244-2377-4, publiée le 15-17 décembre 2008) ».

On peut également citer les publications « Scaling of 32nm Low Power SRAM with High-K Metal Gate (Electron Devices Meeting, 2008, IEDM 2008, IEEE International, p.1 à 4, ISSN : 8164-2284, ISBN : 978-1-4244-2377-4, publiée le 15-17 décembre 2008) » et « Demonstration of Highly Scaled FinFET SRAM Cells with High-K/Metal Gate and Investigation of Characteristic Variability for the 32 nm node and beyond (Electron Devices Meeting, 2008, IEDM 2008, IEEE International, p.1 à 4, ISSN : 8164-2284, ISBN : 978-1-4244-2377-4, publiée le 15-17 décembre 2008) » qui divulguent plusieurs analyses des performances des mémoires de type SRAM (« Static Random Access Memory » en langue anglaise ou « mémoire vive statique » en langue française) fabriquées à partir de transistors en technologie CMOS à 32 nanomètres. On peut encore citer la publication « 22 nm Technology Compatible Fully Functional 0.1 $\mu m^2$ 6T-SRAM Cell (Electron Devices Meeting, 2008, IEDM 2008, IEEE International, p.1 à 4, ISSN : 8164-2284, ISBN : 978-1-4244-2377-4, publiée le 15-17 décembre 2008) » qui divulguent plusieurs analyses des performances des mémoires de type SRAM fabriquées à partir de transistors en technologie CMOS à 22 nanomètres.

Cela étant, les inventeurs ont observé de manière surprenante que la fréquence de transition des transistors, réalisés en technologie CMOS inférieure à 45 nanomètres, et en particulier à 32 nanomètres, augmente lorsque la température moyenne des transistors augmente, ce qui va à l'encontre des préjugés établis, et ce quelle que soit la tension d'alimentation des transistors.

C'est pourquoi, il est proposé un procédé de contrôle de la fréquence d'un signal d'horloge délivré à au moins une partie d'un circuit intégré comportant au moins un transistor ayant une grille de longueur inférieure à quarante-cinq nanomètres, par exemple inférieure ou égale à trente-deux nanomètres.

Ladite partie du circuit intégré peut comporter des portes logiques incluant des transistors ayant une grille de longueur inférieure à quarante-cinq nanomètres. Cela étant, ladite partie du circuit intégré peut comporter tout type de circuit à base de transistors destiné à recevoir un signal d'horloge. Par ailleurs, le reste du circuit intégré peut comporter d'autres types de circuits, tels que par exemple des circuits analogiques, ne nécessitant pas l'utilisation d'un signal d'horloge. En variante, le signal d'horloge peut être utilisé dans la totalité du circuit intégré.

Ce procédé comprend une détermination de la température de ladite au moins une partie du circuit intégré et une augmentation de la fréquence du signal d'horloge lorsque ladite température augmente.

En pratique, par exemple, on fixe une valeur nominale de fréquence pour le signal d'horloge correspondant à une température de référence, par exemple 20°C, et on se réfère à cette température de référence pour décider de l'augmentation ou non de la fréquence du signal d'horloge.

La fréquence de transition d'un transistor correspond à la vitesse de fonctionnement d'un transistor, c'est-à-dire la fréquence pour laquelle le transistor passe de l'état bloquant à l'état passant. Par ailleurs, la fréquence du signal d'horloge délivré au circuit intégré correspond en particulier à la fréquence de fonctionnement du circuit, c'est-à-dire à la fréquence des signaux de commande émis sur la grille des transistors afin de commander ces derniers pour les rendre passant ou bloquant.

Grâce à un contrôle de la fréquence du signal d'horloge du circuit intégré en fonction de la température du circuit, on ajuste la fréquence des transistors, de façon à pouvoir notamment augmenter la vitesse de fonctionnement du circuit intégré.

Par exemple, on augmente la fréquence du signal d'horloge par paliers correspondant à des paliers de températures.

Le procédé peut également comprendre un arrêt de l'augmentation de la fréquence du signal d'horloge lorsque ladite température est supérieure à un seuil.

Ainsi, on peut faire fonctionner le circuit intégré dans une plage de température de sûreté déterminée. A titre d'exemple non limitatif, cette plage de température est comprise entre -40°C et 125°C et dans ce cas, le seuil est égal à 125°C.

En outre, le procédé peut comprendre une diminution de la fréquence du signal d'horloge lorsque ladite température diminue.

En effet, lorsque la température du circuit intégré diminue par rapport à la température de référence ou par rapport à une température précédente plus élevée, la fréquence du signal d'horloge peut ne plus être adaptée au fonctionnement du circuit intégré à cette nouvelle température inférieure, et on diminue alors la fréquence du signal d'horloge.

Selon un autre aspect, il est proposé un dispositif électronique comprenant un générateur commandé apte à générer un signal d'horloge de fréquence ajustable à au moins une partie d'un circuit intégré couplée à la sortie du générateur et comportant au moins un transistor ayant une grille de longueur inférieure à quarante-cinq nanomètres, par exemple inférieure ou égale à trente-deux nanomètres.

Ce dispositif électronique comprend des moyens de détermination pour déterminer la température de ladite au moins une partie du circuit intégré, et des moyens de contrôle couplés aux moyens de détermination et configurés pour commander ledit générateur de façon à augmenter la fréquence du signal d'horloge lorsque ladite température augmente.

Selon un mode de réalisation, la grille dudit au moins transistor comprend une couche métallique.

Selon un autre mode de réalisation, la grille dudit au moins transistor comprend un diélectrique ayant une permittivité relative supérieure à cinq.

Par exemple, les moyens de contrôle sont configurés pour commander ledit générateur de façon à augmenter la fréquence du signal d'horloge par paliers correspondant à des paliers de températures.

Les moyens de contrôle peuvent également comprendre des moyens de protection configurés pour commander ledit générateur de façon à arrêter l'augmentation de la fréquence du signal d'horloge lorsque ladite température est supérieure à un seuil.

En outre, les moyens de contrôle peuvent être configurés pour commander ledit générateur de façon à diminuer la fréquence du signal d'horloge lorsque ladite température diminue.

Selon un autre mode de réalisation, ladite au moins une partie du circuit intégré comporte des portes logiques incluant des transistors ayant des grilles de longueur inférieure à quarante-cinq nanomètres.

Selon encore un autre mode de réalisation, ladite au moins une partie du circuit intégré comporte des portes logiques incluant des transistors ayant des grilles de longueur égale à trente-deux nanomètres.

Avantageusement, la tension d'alimentation dudit au moins transistor est comprise entre zéro volt et une tension maximum admissible d'alimentation du transistor, par exemple 1,1 volts.

Ainsi, on peut fournir un dispositif de contrôle de la fréquence du signal d'horloge quelle que soit la tension d'alimentation des transistors du circuit intégré.

Selon un autre aspect, il est également proposé un microprocesseur comprenant un dispositif tel que défini ci avant.

D'autres avantages et caractéristiques apparaîtront à l'examen de la description détaillée de modes de mise en oeuvre et de réalisation de l'invention, nullement limitatifs, et des dessins annexés sur lesquels :

- la figure 1 illustre de façon schématique un mode de réalisation d'un dispositif de contrôle de la fréquence d'un signal d'horloge d'un circuit intégré ;
- la figure 2 illustre de façon schématique un mode de mise en oeuvre d'un procédé de contrôle de la fréquence d'un signal d'horloge d'un circuit intégré ; et
- la figure 3 illustre de façon schématique un mode de réalisation d'un microprocesseur.

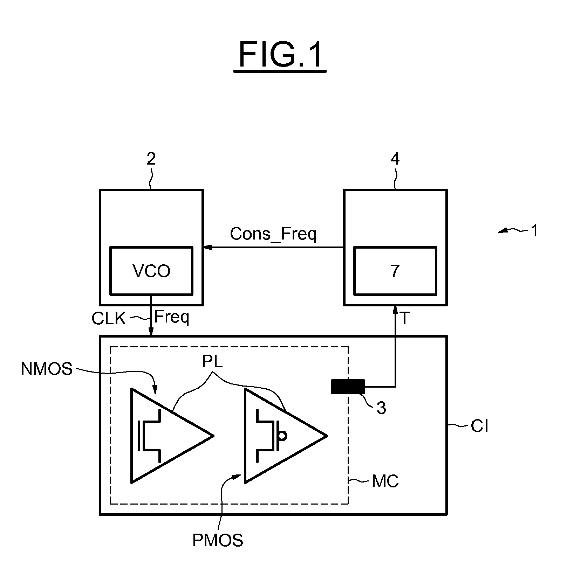

Sur la figure 1, on a représenté de façon schématique un dispositif électronique 1 comprenant des moyens permettant le contrôle de la fréquence Freq d'un signal d'horloge CLK délivré à un circuit intégré CI.

Le circuit intégré CI comprend dans cet exemple au moins une partie MC comportant ici des portes logiques PL et/ou circuits logiques à base de transistors NMOS et/ou PMOS ayant une longueur de grille inférieure à 45 nanomètres, par exemple 32 nanomètres bien que l'invention ne soit pas limitée à cette valeur.

La réalisation de ces transistors NMOS et/ou PMOS est connue et comporte les étapes classiques de réalisation d'un transistor adaptées pour tenir compte de la faible valeur de la longueur de grille. C'est le cas notamment pour la réalisation de la grille.

Plus précisément, le dopage de ces transistors NMOS et/ou PMOS peut s'effectuer à l'aide d'un faisceau d'ions primaires dirigé sur une première cible avec un angle incident différent de zéro, pour ainsi créer un faisceau d'ions secondaires destiné à doper lesdits transistors NMOS, PMOS. A toutes fins utiles, l'homme du métier pourra se référer, par exemple, aux demandes de brevets américains US 2008/0048273 et US 2008/0050897.

Par ailleurs, pour réaliser les grilles, on utilise une photolithographie nanométrique inférieure à 45 nanomètres, par exemple une photolithographie à 32 nanomètres. L'homme du métier pourra se référer à toutes fins utiles à la demande de brevet américain US 2007/0279642 qui décrit un appareil photolithographique pour circuit intégré qui sépare un faisceau lumineux en deux faisceaux à l'aide d'un prisme. Chaque faisceau traverse deux lentilles de grossissement, puis, l'appareil redirige et recombine les deux faisceaux sur la surface d'un substrat pour former un dessin d'interférence. L'homme du métier pourra également se référer à la demande de brevet américain US 2008/0030708, qui décrit un appareil photolithographique pour la réalisation de grilles étroites de semiconducteur, par exemple des grilles de longueur égale à 32 nanomètres, qui comprend un moyen pour générer un faisceau de lumière incident incliné et qui utilise un masque photographique de forme rectangulaire à décalage de phase sans chrome pour moduler en phase la lumière incidente de façon à réaliser une interférence.

Par ailleurs, on pourra réaliser, de préférence, des transistors ayant une grille comprenant une couche métallique en lieu et place du polysilicium. En effet, une couche métallique est utilisée pour éviter la zone d'appauvrissement qui existe dans le cas d'une grille en silicium et pour être compatible avec les matériaux de haute permittivité, dits « high K ». Par exemple, on peut utiliser du molybdène ou du Nitrure de Tantale TaN, et préférentiellement du Nitrure de Titane TiN, pour réaliser la couche métallique.

En outre, on réalisera de préférence des transistors ayant un diélectrique de grille à haute permittivité. On entend par « haute permittivité » un diélectrique ayant une permittivité relative supérieure à 5. On notera que la permittivité d'un diélectrique est calculée à partir de la permittivité du vide $\varepsilon_0$ selon l'équation (1) suivante :

$$\varepsilon = \varepsilon_0 \cdot \varepsilon_r \qquad (\text{équation } 1)$$

$\varepsilon$ : permittivité absolue du diélectrique,
$\varepsilon_0$ : permittivité du vide égale à $8{,}85418782{.}10^{-12}$ F·m$^{-1}$,
$\varepsilon_r$ : permittivité relative du diélectrique, sans unité.

Ce diélectrique à haute permittivité peut être, par exemple, un oxyde d'hafnium HfO2, un oxyde de zirconium ZrO2, un oxyde d'yttrium Y2O3 ou un oxyde de lanthane LaO2. Par exemple, on peut réaliser un diélectrique à haute permittivité avec l'oxynitrure de silicium-hafnium HfSiON en combinaison avec une couche métallique de nitrure de titane TiN.

L'homme du métier pourra également se référer, à toutes fins utiles, à la publication « Systematic Study of Vth Controllability Using ALD-Y$_2$O$_3$, La$_2$O$_3$ and MgO$_2$ layers with HfSiON/Metal Gate First n-MOSFETs for hp 32 nm Bulk Devices (Electron Devices Meeting, 2008, IEDM 2008, IEEE International, p.1 à 4, ISSN : 8164-2284, ISBN : 978-1-4244-2377-4, publiée le 15-17 décembre 2008) » qui décrit les composants utilisés dans la conception des grilles des transistors réalisés avec une technologie CMOS à 32 nanomètres. En ce qui concerne les technologies inférieures à 32 nanomètres, en particulier 28 nanomètres, l'homme du métier pourra se référer notamment à la publication « Competitive and Cost Effective high-k based 28 nm CMOS Technology for Low Power Application » qui a été rendue publique lors de la conférence 2009 IEEE International Electron Devices Meeting (IEDM) tenue à Baltimore MD USA du 7 au 9 décembre 2009, dans laquelle il est décrit que des transistors ayant une grille métallique de longueur égale à 28 nanomètres ont été réalisés à partir des procédés issus de la technologie 32 nanomètres. Cette publication décrit également que les grilles des transistors réalisés en technologie 28 nanomètres ont une densité comprise entre 3900 et 4200 Kg/mm$^2$ et qui est supérieure à celle des transistors réalisés en technologie 32 nanomètres (dont la densité est environ égale à 3550 Kg/mm$^2$) et celle des transistors réalisés en technologie 45 nanomètres (dont la densité est environ égale à 1800 Kg/mm$^2$).

Les inventeurs ont remarqué de manière surprenante que lorsque la température des transistors NMOS et/ou PMOS réalisés avec une technologie CMOS inférieure à 45 nanomètres augmente, celle-ci induit une augmentation de la fréquence de transition des transistors, et donc une augmentation de la vitesse de fonctionnement du transistor, et ce, quelle que soit la valeur de la tension d'alimentation des transistors NMOS et/ou PMOS.

Selon un mode de réalisation, le dispositif électronique 1 comprend un générateur 2 du signal d'horloge CLK ayant la fréquence Freq, des moyens de détermination 3 pour déterminer une température T de la partie MC du circuit intégré CI, et des moyens de contrôle 4 du générateur 2.

Les moyens de détermination 3 peuvent être, par exemple, un capteur de température, couplé aux moyens de contrôle 4.

Le générateur 2 élabore le signal d'horloge CLK du circuit intégré CI et en particulier celui de la partie MC. Ce générateur 2 peut comprendre, par exemple, un oscillateur commandé en tension VCO dont la sortie délivre le signal d'horloge CLK.

Les moyens de contrôle 4 reçoivent la température T de la partie MC du circuit intégré 2, déterminée par les moyens de détermination 3. Les moyens de contrôle 4 sont également couplés à l'entrée de commande du générateur 2 et sont configurés pour commander ledit générateur 2 de manière à augmenter ou diminuer la fréquence du signal d'horloge en fonction de la température T. A cet égard les moyens de contrôle 4 élaborent et transmettent au générateur 2 une consigne de fréquence Cons_Freq qui, dans le cas de l'utilisation d'un oscillateur commandé en tension VCO, est une tension de commande.

Les moyens de contrôle 4 comprennent, en outre, des moyens de comparaison pour comparer ladite température déterminée T avec des seuils de température afin d'élaborer la consigne de fréquence Cons_Freq. Les moyens de contrôle 4 sont notamment configurés pour commander le générateur 2 de manière à initialiser le signal d'horloge CLK à une valeur nominale de fréquence Freq0 correspondant à une température de référence, par exemple 20°C.

Comme indiqué ci avant, les moyens de contrôle 4 sont configurés pour commander le générateur 2 de façon à augmenter la fréquence Freq du signal d'horloge CLK lorsque la température T augmente. Cette augmentation de fréquence du signal d'horloge Freq entraîne une augmentation de la fréquence de transition des transistors NMOS et/ou PMOS, et entraîne également une augmentation de la température moyenne de la partie MC du circuit intégré CI. Par exemple, les moyens de contrôle 4 peuvent commander le générateur 2 de façon à augmenter la fréquence Freq du signal d'horloge par paliers successifs de température. En effet, on peut, par exemple, réaliser les moyens de contrôle 4 pour fournir une première consigne de fréquence Cons_Freql, lorsque la température T est comprise entre deux seuils de température plus élevés que la température de référence, et pour fournir une deuxième consigne de fréquence Cons_Freq2 de valeur supérieure à la première consigne de fréquence Cons_Freql, lorsque la température T dépasse le seuil haut de température plus élevé. Les consignes de fréquence Cons_Freq1, Cons_Freq2 sont reçues par le générateur 2 et celui-ci élabore respectivement deux valeurs Freq1, Freq2 pour la fréquence du signal d'horloge CLK.

Par exemple, les seuils de températures peuvent être égaux respectivement à 50°C et 125°C.

Par ailleurs, les consignes de fréquence Cons_Freq1, Cons_Freq2 peuvent être élaborées, par les moyens de contrôle 4, à partir d'une table de correspondance entre la consigne de fréquence Cons_Freq du signal d'horloge CLK et la température T.

Les moyens de contrôle 4 comprennent des moyens de protection 7 configurés pour commander le générateur 2 de façon à arrêter l'augmentation de la fréquence Freq du signal d'horloge CLK lorsque la température T est supérieure à un seuil de température de protection Tprot. Ces moyens de protection 7 permettent d'empêcher toute détérioration des transistors PMOS et/ou NMOS de la partie MC du circuit intégré CI due à une augmentation trop importante de la température T. Le seuil de température de protection Tprot est déterminé en fonction des caractéristiques des transistors PMOS et/ou NMOS. Par exemple il peut être égal à 150°C pour des transistors utilisés dans le domaine de l'automobile.

Par ailleurs, les moyens de contrôle 4 sont configurés pour commander le générateur 2 de façon à diminuer la fréquence Freq du signal d'horloge CLK lorsque la température T du circuit intégré CI diminue, afin d'adapter la fréquence Freq du signal d'horloge en fonction de la température T.

Les moyens de contrôle 4 peuvent être réalisés de façon logicielle au sein d'un microprocesseur et/ou par des circuits logiques. Le dispositif électronique 1 qui vient d'être décrit peut être réalisé en tout ou partie de façon intégrée. Ainsi, le générateur commandé 2 et/ou les moyens de contrôle 4 peuvent être réalisés au sein d'un circuit intégré qui peut être différent du circuit intégré CI ou bien être directement réalisés sur le circuit intégré CI.

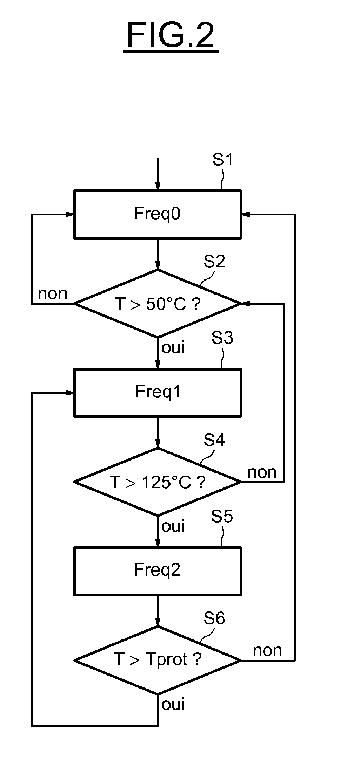

Sur la figure 2, on a représenté un mode de mise en oeuvre d'un procédé de contrôle de la fréquence du signal d'horloge d'une partie MC d'un circuit intégré CI comportant au moins un transistor ayant une grille de longueur inférieure à 45 nanomètres, par exemple égale à 32 nanomètres.

Ce procédé peut être mis en oeuvre par le dispositif 1 qui vient d'être décrit.

Dans une première étape S1, on initialise la fréquence du signal d'horloge délivré à un circuit intégré CI à une valeur nominale de fréquence Freq0 correspondant à une température de référence. Puis, on effectue une deuxième étape S2 dans laquelle on compare la température T de la partie MC du circuit intégré CI avec un premier seuil de température plus élevé que la température de référence. Ce premier seuil de température peut être par exemple égale à 50°C. Si la température T est supérieure au premier seuil de température, on effectue alors une troisième étape S3 tandis qu'on ne modifie pas la fréquence Freq dans le cas contraire.

Dans la troisième étape S3, on délivre au circuit intégré CI, le signal d'horloge ayant une deuxième fréquence Freq1 de valeur supérieure à la valeur nominale de fréquence Freq0.

On effectue ensuite une quatrième étape S4 dans laquelle on compare la température T à un deuxième seuil de température, par exemple égal à 125°C, le deuxième seuil de température étant supérieur au premier seuil de température. Si la température T est supérieure audit deuxième seuil de température, on effectue une cinquième étape S5 et on effectue à nouveau la deuxième étape de comparaison S2 dans le cas contraire.

Lors de la cinquième étape S5, on délivre au circuit intégré CI le signal d'horloge ayant une troisième fréquence Freq2, de valeur supérieure à la deuxième fréquence Freq1.

On effectue ensuite une sixième étape S6 de protection, dans laquelle on compare la température T avec un seuil de température de protection Tprot. Si la température T est supérieure audit seuil de température de protection Tprot, on effectue à nouveau la troisième étape S3 et on effectue à nouveau la première étape S1 dans le cas contraire.

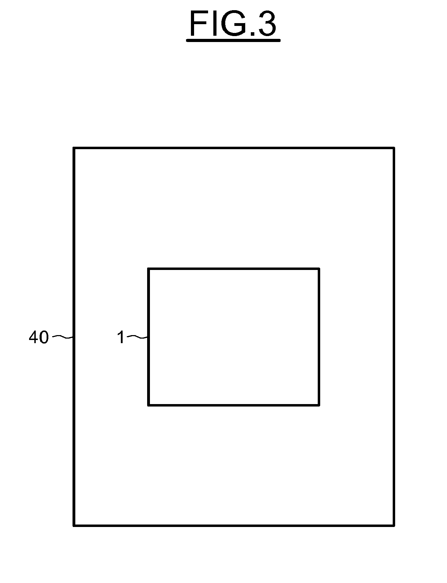

Sur la figure 3, on a représenté un mode de réalisation d'un microprocesseur 40 comprenant un dispositif électronique 1 tel que décrit ci-dessus. Le dispositif électronique 1 permet ainsi de contrôler la fréquence d'un ou de plusieurs signaux d'horloge délivrés, par exemple, à certains éléments internes du microprocesseur 40.

**Revendications**

1. Procédé de contrôle de la fréquence d'un signal d'horloge délivré à au moins une partie d'un circuit intégré comportant au moins un transistor ayant une grille de longueur inférieure à quarante-cinq nanomètres, comprenant une détermination (S2) de la température de ladite au moins une partie du circuit intégré et une augmentation (S3) de la fréquence du signal d'horloge lorsque ladite température augmente.

2. Procédé selon la revendication 1, dans lequel la grille dudit au moins un transistor a une longueur égale à trente-deux nanomètres.

3. Procédé selon la revendication 1 ou 2, dans lequel on augmente la fréquence du signal d'horloge par paliers correspondant à des paliers de températures.

4. Procédé selon l'une des revendications 1 à 3, comprenant en outre un arrêt de l'augmentation de la fréquence du signal d'horloge lorsque ladite température est supérieure à un seuil.

5. Procédé selon l'une des revendications 1 à 4, comprenant une diminution (S1) de la fréquence du signal d'horloge lorsque ladite température diminue.

6. Procédé selon l'une des revendications 1 à 5, dans lequel on délivre le signal d'horloge à ladite au moins une partie du circuit intégré comportant des portes logiques incluant des transistors ayant une grille de longueur inférieure à quarante-cinq nanomètres.

7. Dispositif électronique comprenant un générateur commandé (2) apte à générer un signal d'horloge de fréquence ajustable à au moins une partie d'un circuit intégré (CI) couplée à la sortie du générateur et comportant au moins un transistor ayant une grille de longueur inférieure à quarante-cinq nanomètres, des moyens de détermination (3) pour déterminer la température de ladite au moins une partie du circuit intégré, et des moyens de contrôle (4) couplés aux moyens de détermination (3) et configurés pour commander ledit générateur (2) de façon à augmenter la fréquence du signal d'horloge lorsque ladite température augmente.

8. Dispositif selon la revendication 7, dans lequel la grille dudit au moins transistor a une longueur égale à trente-deux nanomètres.

9. Dispositif selon la revendication 7 ou 8, dans lequel la grille dudit au moins transistor comprend une couche métallique.

10. Dispositif selon l'une des revendications 7 à 9, dans lequel la grille dudit au moins transistor comprend un diélectrique ayant une permittivité relative supérieure à cinq.

11. Dispositif selon l'une des revendications 7 à 10, dans lequel les moyens de contrôle (4) sont configurés pour commander ledit générateur (2) de façon à augmenter la fréquence du signal d'horloge par paliers correspondant à des paliers de températures.

12. Dispositif selon l'une des revendications 7 à 11, dans lequel les moyens de contrôle (4) comprennent des moyens de protection (7) configurés pour commander ledit générateur (2) de façon à arrêter l'augmentation de la fréquence du signal d'horloge lorsque ladite température est supérieure à un seuil.

13. Dispositif selon l'une des revendications 7 à 12, dans lequel les moyens de contrôle (4) sont en outre configurés pour commander ledit générateur (2) de façon à diminuer la fréquence du signal d'horloge lorsque ladite température diminue.

14. Dispositif selon l'une des revendications 7 à 13, dans lequel ladite au moins une partie du circuit intégré comporte des portes logiques incluant des transistors ayant des grilles de longueur inférieure à quarante-cinq nanomètres.

15. Dispositif selon la revendication 14, dans lequel ladite au moins une partie du circuit intégré comporte des portes logiques incluant des transistors ayant des grilles de longueur égale à trente-deux nanomètres.

16. Microprocesseur (40) comprenant un dispositif selon l'une des revendications 7 à 15.

# FIG.1

# FIG.2

```
                    S1
    ┌──────────────────────┐
    │        Freq0         │◄─┐
    └──────────────────────┘  │
              │               │
              ▼    S2         │
         ◄ ─ ◇               │
    non    ◇ T > 50°C ? ◇ ◄───┤
         ◇ ─ ─ ◇             │
              │ oui   S3      │
              ▼               │
    ┌──────────────────────┐  │
    │        Freq1         │  │
    └──────────────────────┘  │
              │               │
              ▼    S4         │
         ◇ T > 125°C ? ◇ ──►  │
              │         non   │
              │ oui   S5      │
              ▼               │
    ┌──────────────────────┐  │
    │        Freq2         │  │
    └──────────────────────┘  │
              │               │
              ▼    S6         │
         ◇ T > Tprot ? ◇ ──►  non
              │ oui
```

# FIG.3

40 ⌇      1 ⌇

Europäisches Patentamt

European Patent Office

Office européen des brevets

**RAPPORT DE RECHERCHE EUROPEENNE**

Numéro de la demande

EP 11 15 0061

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 5 481 210 A (GENZEL MICHAEL [DE]) 2 janvier 1996 (1996-01-02) * revendication 1 * ----- | 1-16 | INV. G06F1/08 |
| A | US 5 774 704 A (WILLIAMS IAN MICHAEL [US]) 30 juin 1998 (1998-06-30) * revendications 17,20 * ----- | 1-16 | |
| A | US 2007/076498 A1 (HO DUEN-YI [TW] ET AL) 5 avril 2007 (2007-04-05) * alinéa [0003]; revendication 1 * ----- | 1-16 | |

DOMAINES TECHNIQUES RECHERCHES (IPC)

G06F

Le présent rapport a été établi pour toutes les revendications

| Lieu de la recherche | Date d'achèvement de la recherche | Examinateur |
|---|---|---|
| Munich | 10 février 2011 | Boudet, Joachim |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.....................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**                    EP 11 15 0061

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-02-2011

| Document brevet cité au rapport de recherche | | Date de publication | Membre(s) de la famille de brevet(s) | | Date de publication |
|---|---|---|---|---|---|
| US 5481210 | A | 02-01-1996 | DE | 4340284 C1 | 14-06-1995 |
| | | | EP | 0655838 A2 | 31-05-1995 |
| US 5774704 | A | 30-06-1998 | AUCUN | | |
| US 2007076498 | A1 | 05-04-2007 | CN | 1924759 A | 07-03-2007 |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- US 20080048273 A
- US 20080050897 A
- US 20070279642 A
- US 20080030708 A

**Littérature non-brevet citée dans la description**

- Electron Devices Meeting. *IEDM 2008, IEEE International,* 15 Décembre 2008, ISSN 8164-2284, ISBN 978-1-4244-2377-4, 1-4
- Competitive and Cost Effective high-k based 28 nm CMOS Technology for Low Power Application. *IEEE International Electron Devices Meeting (IEDM,* 07 Décembre 2009